# EUROPÄISCHE PATENTSCHRIFT

(11) **EP 1 897 194 B1**
(45) Veröffentlichungstag und Bekanntmachung des Hinweises auf die Patenterteilung: **15.10.2014**
(21) Anmeldenummer: 06763864.3
(22) Anmeldetag: 23.06.2006
(51) Int. Cl.: H02B 13/045

(54) **SICH IM WESENTLICHEN ROHRFÖRMIG ERSTRECKENDES KAPSELUNGSGEHÄUSE MIT ZUMINDEST DREI GEHÄUSEABSCHNITTEN**
CAPSULE HOUSING EXTENDING IN AN ESSENTIALLY TUBULAR MANNER COMPRISING AT LEAST THREE HOUSING SECTIONS
BOITIER D'ENCAPSULAGE S'ETENDANT DE FAÇON ESSENTIELLEMENT TUBULAIRE COMPORTANT AU MOINS TROIS SECTIONS DE BOITIER

(30) Priorität: 27.06.2005 DE 102005031098
(43) Veröffentlichungstag der Anmeldung: 12.03.2008
(73) Patentinhaber: Siemens Aktiengesellschaft, 80333 München (DE)
(72) Erfinder: NOWAKOWSKI, Andrzej, 13435 Berlin (DE)
(86) Internationale Anmeldenummer: PCT/EP2006/063512
(87) Internationale Veröffentlichungsnummer: WO 2007/000421

(56) Entgegenhaltungen:
- DE-A1- 4 320 906
- DE-B- 1 230 115
- DE-U1- 29 909 516
- FR-A- 2 407 586

## Beschreibung

Die Erfindung bezieht sich auf ein zumindest drei Gehäuseabschnitte aufweisendes, sich längs einer Achse im Wesentlichen rohrförmig erstreckendes gasdichtes Kapselungsgehäuse, dessen erster Gehäuseabschnitt zwischen einen zweiten und einen dritten Gehäuseabschnitt geflanscht ist, wobei die Gehäuseabschnitte einen druckfesten Aufnahmeraum für ein elektrisches Schaltgerät begrenzen, wobei der Aufnahmeraum im Bereich des den zweiten und den dritten Gehäuseabschnitt verbindenden ersten Gehäuseabschnittes einen geringeren Querschnitt aufweist, als die jeweiligen Querschnitte des Aufnahmeraumes im Bereich des zweiten und des dritten Gehäuseabschnittes.

Beispielsweise ist aus der Offenlegungsschrift DE 43 20 906 A1 ein Kapselungsgehäuse bekannt. Dort sind drei Gehäuseabschnit - te jeweils stirnseitig aneinander geflanscht. Die drei Gehäuseabschnitte sind gleichartig ausgebildet. Dadurch ist die Anzahl der benötigten Grundformen reduziert. Die Gehäuseabschnitte sind jeweils stirnseitig mit radial nach außen angeformten Blattflanschen versehen. Die Blattflansche werden mit entsprechenden Verbindungselementen gegeneinander gepresst, so dass ein sich im Wesentlichen rohrförmig erstreckendes gasdichtes Kapselungsgehäuse entsteht.

Durch den Einbau von Schaltgeräten in Isoliergas befüllte gasdichte Kapselungsgehäuse kann das Bauvolumen derartiger Schaltgeräte reduziert werden. Bei einer Beaufschlagung des Isoliergases mit einem erhöhten Druck kann eine deutliche Reduzierung des Bauvolumens erfolgen. Da es sich bei derartigen Kapselungsgehäusen aufgrund der im Innern herrschenden erhöhten Drücke um Druckbehälter handelt, sind entsprechende Druckprüfungen nachzuweisen.

Fügestellen sind Schwachpunkte in einem Kapselungsgehäuse dar. Um eine ausreichende Berstfestigkeit zu gewährleisten, sind eingesetzte Blattflansche großzügig zu dimensionieren. Durch diese Dimensionierung ist zum einen ein erhöhter Einsatz von Material für die Blattflansch nötig, zum anderen wird durch die radial umlaufenden Blattflansche der Umfang der Kapselungsgehäuse vergrößert. Insbesondere beim Einsatz von vergleichsweise schlanken Kapselungsgehäusen, die unmittelbar einanderliegend angeordnet werden sollen, kann dies zu einem erhöhten Platzbedarf führen.

Aus der Auslegeschrift DE 1 230 150 ist ein Kapselungsgehäuse bekannt, welches einen ersten, einen zweiten sowie einen dritten Gehäuseabschnitt aufweist. Die Gehäuseabschnitte begrenzen einen druckfesten Aufnahmeraum, wobei der Aufnahmeraum im Bereich des den zweiten und den dritten Gehäuseabschnitt verbindenden ersten Gehäuseabschnittes einen geringeren Querschnitt aufweist, als die jeweiligen Querschnitte des Aufnahmeraumes im Bereich des zweiten und des dritten Gehäuseabschnittes. Die dadurch erzielte Bauraumreduzierung kann jedoch nur bedingt ausgenutzt werden, da aufgrund der vorgesehenen Verbindung von erstem, zweitem und dritten Gehäuseabschnitt eine Vergrößerung des Umfanges erfolgt.

Aufgabe der Erfindung ist es, ein Kapselungsgehäuse der eingangs genannten Art auszugestalten, welches bei einer hohen Berstfestigkeit eine schlanke Außenkontur aufweist und weiterhin einen verbessert nutzbaren Aufnahmeraum aufweist.

Bei einem Kapselungsgehäuse der eingangs genannten Art wird dies erfindungsgemäß dadurch gelöst, dass zum Anflanschen des zweiten Gehäuseabschnittes an den ersten Gehäuseabschnitt oder des dritten Gehäuseabschnittes an den ersten Gehäuseabschnitt eine Flanschverbindung gebildet ist, welche an dem ersten Gehäuseabschnitt einen Blattflansch aufweist, welcher mittels eines lösbaren Verbindungselementes an eine Stirnseite des zweiten oder des dritten Gehäuseabschnittes gepresst ist, wobei eine Wandung des zweiten oder dritten Gehäuseabschnittes im Bereich der Stirnseite verdickt ist und die Verdickung zumindest teilweise radial nach Innen unter Verringerung des Querschnitts des Aufnahmeraumes ausgeformt ist, wobei längs der Achse eine Unterbrechereinheit eines druckgasisolierten Leistungsschalters angeordnet ist, wobei während eines Schaltvorganges entstehende Gase jeweils in den zweiten oder den dritten Gehäuseabschnitt ausströmen und dort verwirbeln.

Der Aufnahmeraum zur Aufnahme des elektrischen Schaltgerätes muss zum einen Anforderungen hinsichtlich einer dielektrischen Festigkeit erfüllen, zum anderen müssen Vorschriften von Druckbehälterverordnungen erfüllt werden.

Aus dielektrischen Gründen ist es erforderlich, den Innenraum möglichst frei von Kanten und Vorsprüngen zu halten, d. h. der Aufnahmeraum weist in sich abgerundete Konturen auf. Endseitig ist das rohrförmige Kapselungsgehäuse durch entsprechende kuppelartige Anformungen bzw. Deckel verschließbar. Es werden vorzugsweise kreisrunde oder ovale Querschnitte zur Ausgestaltung von Aufnahmeräumen eingesetzt. Vorteilhaft ist, wenn bei einer im Wesentlichen zylinderförmigen Gestalt der Gehäuseabschnitte die Länge jedes Gehäuseabschnittes in Richtung der Zylinderachse zumindest dem Durchmesser des zylinderförmigen Abschnittes entspricht. Der Durchmesser ist dabei jeweils der Durchmesser des Innenraumes in dem jeweiligen Gehäuseabschnitt, in welchem der Aufnahmeraum eine im Wesentlichen zylindrische Form aufweist. Die Länge ist auf den jeweiligen zylindrischen Abschnitt des Aufnahmeraumes bezogen. Unter einer zylindrischen Form wird auch verstanden, dass beispielsweise Flansche, Teilchenfallen oder andere Einbauten die zylindrische Form teilweise auflösen.

Wird der Querschnitt im Bereich des ersten Gehäuseabschnittes gegenüber den Querschnitten im Bereich des zweiten und dritten Gehäuseabschnittes verringert, so entsteht ein Aufnahmeraum, der einen zentralen Abschnitt aufweist, der gegenüber den endseitig angeordneten Abschnitten tailliert ist. Eine Taillierung sollte derart ausgestaltet sein, dass von den querschnittsgrößeren Abschnitten eine konisch zulaufende Einschnürung des Aufnahmeraums in Richtung des zentralen ersten Gehäuseabschnittes erfolgt. Dabei kann vorgesehen sein, das der erste Gehäuseabschnitt selbst mit einer im Wesentlichen zylindrischen Gestalt den Aufnahmeraum begrenzt und lediglich die Übergänge zwischen dem ersten und zweiten bzw. dem ersten und dritten Gehäuseabschnitt eine konische Formgebung aufweisen.

Mit der Einschnürung des Kapselungsgehäuses im mittigen Bereich entstehen an den Endseiten des Aufnahmeraumes keulenartige Verdickungen. In den keulenartig verdickten Bereichen ist es günstig auftretende Gasströme, beispielsweise ausgelöst durch Lichtbogenerscheinungen, abströmen zu lassen und dort eine entsprechende Beruhigung hervorzunehmen. Dadurch wird der zentrisch angeordnete erste Gehäuseabschnitt vor starken Beanspruchungen geschützt. Durch die Verringerung des Querschnittes im mittigen Bereich ist die Druckfestigkeit des ersten Gehäuseabschnittes gegenüber dem zweiten und dritten Gehäuseabschnitt verstärkt. Weiterhin entstehen dadurch im Innern des Aufnahmeraumes Strömungsverhältnisse, die eine Entspannung von Überdruckwellen usw. in den endseitigen zweiten und dritten Gehäuseabschnitten fördern.

Eine weitere vorteilhafte Ausgestaltung kann vorsehen, dass zum Anflanschen des zweiten Gehäuseabschnittes an den ersten Gehäuseabschnitt oder des dritten Gehäuseabschnittes an den ersten Gehäuseabschnitt eine Flanschverbindung gebildet ist, welche an dem ersten Gehäuseabschnitt einen Blattflansch aufweist, welcher mittels eines lösbaren Verbindungselementes an eine Stirnseite des zweiten oder des dritten Gehäuseabschnittes gepresst ist, wobei eine Wandung des zweiten oder dritten Gehäuseabschnittes im Bereich der Stirnseite verdickt ist und die Verdickung zumindest teilweise radial nach Innen unter Verringerung des Querschnittes des Aufnahmeraumes ausgeformt ist.

Wie oben stehend ausgeführt bedarf es bei einem Einsatz von Flanschverbindungen, die aus zwei Blattflanschen gebildet sind, einer großzügigen Dimensionierung der Blattflansche, um am Ansatz des Blattflansches angreifende Ausbiege- und Abknickkräfte zu beherrschen. Durch den Einsatz einer Flanschverbindung, die einen Blattflansch aufweist, welcher an der Stirnseite einer verstärkten Wandung anliegt, können die Umbruchkräfte in verbesserter Weise beherrscht werden. In die verstärkte Wandung können Kraftlinien annähernd linear eingeleitet werden. Durch die Verdickung der verstärkten Wand radial zum Innern des Aufnahmeraumes kann dabei in geeigneter Weise ein Übergang von dem größeren Querschnitt des zweiten bzw. dritten Gehäuseabschnittes auf den kleineren Querschnitt des ersten Gehäuseabschnittes vorgenommen werden. Da die Wand selbst in ihrer Wandstärke verstärkt ist und dies konisch mit einem stetigen Übergang vorgenommen ist, um in Innern des Kapselungsgehäuses einen kanten- bzw. vorsprungsfreien Aufnahmeraum auszubilden, können die Kräfte gleichmäßig am Umfang der zweiten und dritten Gehäuseabschnitte eingeleitet werden. Durch eine Querschnittsreduzierung des ersten Gehäuseabschnittes wird in radialer Richtung nach Außen ein ausreichender Platz geschaffen, um den Blattflansche der Flanschverbindung unterzubringen. Durch die Einschnürung des Aufnahmeraumes und einer entsprechenden Einschnürung der äußeren Kontur des Kapselungsgehäuses kann der Blattflansch selbst im Schattenbereich der verdickten stirnseitigen Wandung des zweiten bzw. dritten Gehäuseabschnittes des Kapselungsgehäuses angeordnet sein.

Je ausgeprägter die Taillierung des ersten Gehäuseabschnittes vorgesehen ist, desto mehr Raum wird zur Aufnahme des Blattflansches zur Verfügung gestellt. In einer einfachen Ausgestaltung kann vorteilhaft vorgesehen sein, dass jeder der drei Gehäuseabschnitte jeweils einen über einen Großteil seiner Länge ausgebildeten im Wesentlichen zylinderförmigen Abschnitt des Aufnahmeraumes ausbildet, wobei der Durchmesser des zylinderförmigen Abschnittes des ersten Gehäuseabschnittes kleiner ist als die Durchmesser der jeweils endseitig angeordneten zylinderförmigen Abschnitte des Aufnahmeraumes. Die Außenkontur des Kapselungsgehäuses kann dem Aufnahmeraum folgend tailliert ausgestaltet sein. Zwischen den einzelnen zylinderförmigen Abschnitten des Aufnahmeraumes können kontinuierliche sprungfreie Übergänge im Bereich der Fügestellen ausgeformt sein.

Vorteilhafterweise kann dabei vorgesehen sein, dass der Blattflansch bezüglich der Achse radial nach Außen gekröpft ist.

Ein radial nach außen am ersten Gehäuseabschnitt angeformter Blattflansch gestattet es, eine einfache Verschraubung des Flansches an der Stirnseite des zweiten bzw. dritten Gehäuseabschnittes vorzusehen. Solch eine Flanschverbindung kann mit einfachen Mitteln gelöst werden. So ist es möglich, Reparaturen an dem Kapselungsgehäuse selbst bzw. an einem im Innern des Kapselungsgehäuses angeordneten elektrischen Schaltgerät vorzunehmen.

Eine weitere vorteilhafte Ausgestaltung kann vorsehen, dass die Verdickung radial nach außen, die äußere Kontur des zweiten oder dritten Gehäuseabschnittes überragend ausgeformt ist.

Neben einer radial nach Innen gezogenen verdickten Wandung kann das dem Blattflansch zugewandte stirnseitige Ende des zweiten bzw. dritten Gehäuseabschnittes radial nach Außen erweitert sein und eine zusätzliche Verdickung der Wandung erfolgen. So können größere Kräfte einfacher in die rohrförmiggen Gehäuseabschnitte eingeleitet werden.

Bei einer radialen Einschnürung des Aufnahmeraumes kann mit einer sich radial nach innen verdickenden Wandung ein kontinuierlicher Übergang zwischen den Durchmessern der verschiedenen Gehäuseabschnitte erzielt werden. Es kann vorgesehen sein, die Verdickung annähernd symmetrisch radial nach innen und radial nach außen auszuführen. Dadurch können einzuleitende Kräfte über Verbindungselemente in die Mittenbereiche der Wandungen des zweiten bzw. dritten Gehäuseabschnittes eingeleitet werden. Dadurch werden ein Umlenken der Kräfte über Eck und damit verbundene Knick- und Biegemomente verhindert.

Eine derartig ausgestaltete Flanschverbindung ist zur Übertragung von hohen Kräften, wie sie beispielsweise bei im Innern des Kapselungsgehäuses auftretenden Explosionen oder Entladungen entstehen können, geeignet. Dabei wird der Umfang des Kapselungsgehäuses in einem geringeren Maße vergrößert als bei der Verwendung zweier miteinander zu verflanschender herkömmlicher Blattflansche.

Eine vorteilhafte Ausgestaltung kann vorsehen, dass der Blattflansch Ausnehmungen aufweist, durch welche in der Stirnseite der Wandung des zweiten oder dritten Gehäuseabschnittes des Kapselungsgehäuses verankerte Verbindungselemente hindurchragen.

Als Verbindungselemente sind beispielsweise Bolzen, Schrauben, Muttern, Niete oder andere lösbare Verbindungselemente einsetzbar. Die Verankerung der Verbindungselemente in der Stirnseite des zweiten oder dritten Gehäuseabschnittes kann dabei derart erfolgen, dass diese selbst innerhalb der Wandung dauerhaft verankert sind, beispielsweise durch ein Einschweißen oder ein Angießen der Verbindungselemente. Es kann jedoch auch vorgesehen sein, dass die durch die Ausnehmungen hindurchragenden Verbindungselemente unabhängig von dem zweiten oder dritten Gehäuseabschnitt des Kapselungsgehäuses bewegbar sind. In diesem Fall kann beispielsweise vorgesehen sein, dass in eine Stirnseite einer Wandung Innengewinde aufweisende Bohrungen eingebracht sind, in welche als Verbindungselemente dienende Bolzen einzuschrauben sind.

Eine weitere vorteilhafte Ausgestaltung kann vorsehen, dass zwischen Ausnehmungen den Blattflansch stabilisierende Rippen Rippen erstrecken sich auf der von der Flanschfläche des Blattflansches abgewandten Seite und stellen eine Verbindung zwischen einer Mantelfläche des Kapselungsgehäuses und dem Blattflansch her. Um ein effektives Fertigungsverfahren einsetzen zu können, sind die Rippen parallel zueinander ausgerichtete. Die Rippen weisen jeweils eine plattenartige Struktur auf, wobei deren Länge bzw. Höhe größer ist als ihre Dicke. Durch die Rippen wird ein Verformen des Blattflansches verhindert.

Eine weitere vorteilhafte Ausgestaltung der Erfindung kann vorsehen, dass zwischen dem ersten und dem zweiten Gehäuseabschnitt sowie dem ersten und dem dritten Gehäuseabschnitt jeweils gleichartige Flanschverbindungen angeordnet sind.

Da im ersten Gehäuseabschnitt eine Verringerung des Querschnittes des Aufnahmeraumes erfolgt, ist es vorteilhaft, beidseitig gleichartige Flanschverbindungen zum Anflanschen des zweiten bzw. dritten Gehäuseabschnittes vorzusehen. Besonders vorteilhaft ist, wenn die beiden Flanschverbindungen spiegelsymmetrisch bezüglich einer lotrecht zur Achse liegenden Ebene angeordnet sind. Dadurch kann für beide Flanschverbindungen die jeweils im Bereich des ersten Gehäuseabschnittes liegende hinterschnittene Zone zur Aufnahme von Verbindungselementen sowie der Blattflansche dienen.

Eine weitere vorteilhafte Ausgestaltung sieht vor, dass längs der Achse eine Unterbrechereinheit eines druckgasisolierten Leistungsschalters angeordnet ist, wobei während eines Schaltvorganges entstehende Gase jeweils in den zweiten oder den dritten Gehäuseabschnitt ausströmen und dort verwirbeln.

Leistungsschalter dienen dem Schalten von Betriebs- und Kurzschlussströmen. Insbesondere bei dem Schalten von Kurzschlussströmen, die mit dem Auftreten von entsprechenden Kurzschlusslichtbögen im Innern des Kapselungsgehäuses verbunden sein können, ist die Entstehung von heißen Schaltgasen nicht ausgeschlossen. Es kann vorgesehen sein, dass sich jeweils in dem zweiten oder dritten Teilabschnitt des Kapselungsgehäuses Schaltstrecken des Leistungsschalters befinden. Insbesondere bei dem Schalten von Strömen im Hochspannungsbereich kann bei Hochspannungs-Leistungsschaltern vorgesehen sein, zwei in Reihe liegende Schaltstrecken zu verwenden, um die nötige Spannungsfestigkeit zu gewährleisten. Die beiden Schaltstrecken sind durch den ersten Gehäuseabschnitt des Kapselungsgehäuses hindurch elektrisch leitend miteinander verbunden. In dem zweiten bzw. dritten Gehäuseabschnitt des Kapselungsgehäuses sind im Wesentlichen die beiden Schaltstrecken angeordnet. Die Schaltstrecken sind zumeist gleichartig ausgebildet und weisen relativ zueinander bewegbare Lichtbogen- sowie Nennstromkontaktstücke auf.

Eine weitere vorteilhafte Ausgestaltung kann vorsehen, dass mantelseitig an dem ersten Gehäuseabschnitt eine Antriebseinrichtung in das Innere des Kapselungsgehäuses eingeführt ist.

Bei einer vorstehend beschriebenen Ausgestaltung eines Hochspannungs-Leistungsschalters mit zwei Schaltstrecken, die sich jeweils in dem zweiten bzw. dritten Gehäuseabschnitt erstrecken, ist es vorteilhaft, eine Antriebseinrichtung mantelseitig an dem ersten Gehäuseabschnitt einzuführen. Eine derartige Antriebseinrichtung kann beispielsweise eine Welle oder elektrisch isolierende Schaltstange sein, welche eine Antriebsbewegung eines Motors in das Innere des Kapselungsgehäuses überträgt. Vorteilhafterweise kann beispielsweise vorgesehen sein, dass innerhalb des ersten Gehäuseabschnittes des Kapselungsgehäuses ein Getriebe angeordnet ist, welches der Umlenkung der Antriebsbewegung in Richtung des zweiten bzw. dritten Gehäuseabschnittes dient und die bewegbaren Kontaktstücke an die Antriebseinrichtung ankoppelt.

Eine weitere vorteilhafte Ausgestaltung kann vorsehen, dass die Gehäuseabschnitte aus elektrisch leitendem Material geformte Gusskörper sind.

Der Einsatz von elektrisch leitendem Material zur Ausgestaltung des Kapselungsgehäuses ermöglicht es, eine Berührung der äußeren Oberfläche des Kapselungsgehäuses zuzulassen. Im Regelfall ist dabei das Gehäuse selbst mit Erdpotential beaufschlagt. Bei einem elektrischen Störfall, beispielsweise einer Berührung zwischen einem spannungsführenden Leiter und dem Kapselungsgehäuse, ist eine rasche Ausbildung einer Fehlerstrombahn gewährleistet, wodurch entsprechende Schutzeinrichtungen ansprechen und eine Gefährdung von Anlagen und Personen verhindert wird. Die Anwendung von einem Gießverfahren zur Herstellung eines Gusskörpers ist eine Maßnahme, um eine Vielzahl von maßhaltigen Gehäuseabschnitten zu erzeugen. Dabei ist darauf zu achten, dass die Gusskörper selbst eine ausreichende Gasdichtigkeit aufweisen. Durch die Nutzung von parallel zueinander liegenden Rippen an dem Blattflansch ist weiterhin der Einsatz von einfachen Gussformen möglich, da der Gusskörper sich gut aus den Gussformen herauslösen lässt.

Im Folgenden werden Ausführungsbeispiele der Erfindung schematisch in Figuren gezeigt und nachfolgend näher beschrieben.

Dabei zeigt die
- Figur 1: ein im Wesentlichen rohrförmig ausgestaltetes Kapselungsgehäuse, welches einen ersten, einen zweiten und einen dritten Gehäuseabschnitt aufweist, die
- Figur 2: einen Schnitt durch einen stirnseitig an eine Wandung angeflanschten Blattflansch, die
- Figur 3: eine Variante eines rohrförmig ausgestalteten Kapselungsgehäuses, die
- Figur 4: eine Sicht auf einem Blattflansch mit Rippen und die
- Figur 5: einen Schnitt durch den Blattflansch mit Rippen.

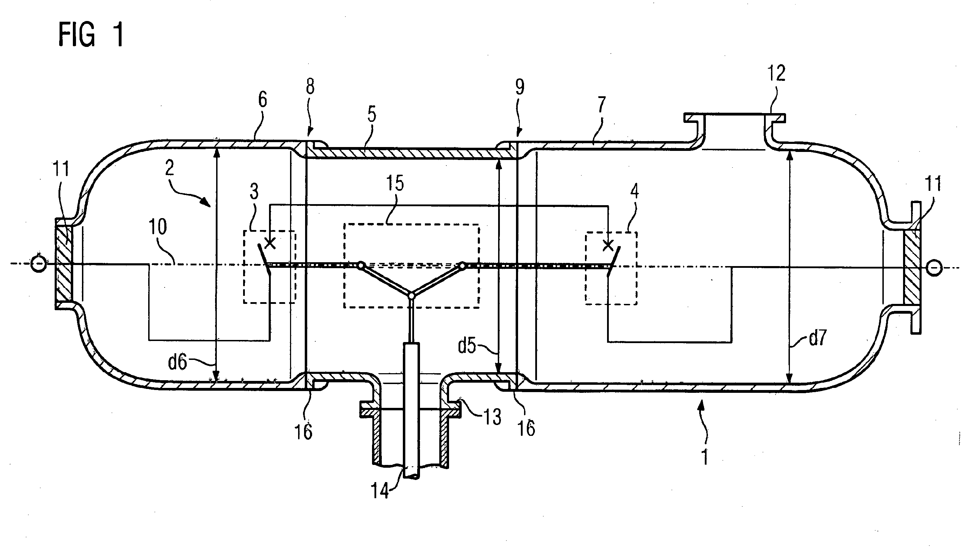

Die Figur 1 zeigt einen Schnitt durch ein gasdichtes Kapselungsgehäuse 1 eines elektrischen Schaltgerätes 2. Das elektrische Schaltgerät 2 weist eine Unterbrechereinheit auf, die eine erste und eine zweite Schaltstrecke 3, 4 beinhaltet, die in Reihe miteinander verschaltet sind. Jede der Schaltstrecken 3, 4 ist beispielsweise als nach dem Selbstblasprinzip wirkende Schaltstrecke aufgebaut. Beispielhaft werden hierzu die Patentschriften US 6,177,643 B1 und US 6,271,494 B1 genannt, in welchen der konstruktive Aufbau einer Schaltstrecke mit relativ zueinander bewegbaren Lichtbogen- sowie Nennstromkontaktstücken und einer Isolierstoffdüse beschrieben ist. Der Inhalt der vorstehend genannten Druckschriften ist Teil dieser Anmeldung.

Das Kapselungsgehäuse 1 ist in seinem Innern mit einem elektronegativen Gas beispielsweise Schwefelhexafluorid, Stickstoff oder einem Gemisch aus Gasen befüllt. Das Gas ist mit einem gegenüber der Umgebung erhöhten Druck beaufschlage, um dessen Isolierfestigkeit zu erhöhen. Bei einem Schaltvorgang des elektrischen Schaltgerätes 2 können zwischen den bewegbaren Kontaktstücken der Schaltstrecken 3, 4 Lichtbögen entstehen, welche das im Innern des Kapselungsgehäuses 1 befindliche Isoliergas erhitzen und dieses expandieren. Die Expansion bewirkt eine Druckerhöhung im Innern des abgeschlossenen Kapselungsgehäuses 1. Das Kapselungsgehäuse 1 muss derart bemessen sein, dass zu erwartende Überdrücke in seinem Inneren zu keiner Beeinträchtigungen des Kapselungsgehäuses 1 führen.

Zur Erzeugung einer druckfesten Struktur ist das Kapselungsgehäuse 1 aus einem ersten Gehäuseabschnitt 5, einem zweiten Gehäuseabschnitt 6 sowie einem dritten Gehäuseabschnitt 7 gebildet. Jeder der Gehäuseabschnitte 5, 6, 7 weist eine rohrförmige Struktur auf. Der erste Gehäuseabschnitt 5 und der zweite Gehäuseabschnitt 6 sind stirnseitig mittels einer ersten Flanschverbindung 8 miteinander verbunden. Ebenso sind der erste Gehäuseabschnitt 5 sowie der dritte Gehäuseabschnitt 7 über eine zweite Flanschverbindung 9 miteinander verbunden. Die Flanschverbindungen 8, 9 sind gasdicht ausgestaltet. Die Gehäuseabschnitte 5, 6, 7 sind in ihrer Grundform rotationssymmetrisch ausgestaltet. Die Gehäuseabschnitte 5, 6, 7 sind mit ihren Rotationsachsen koaxial zueinander liegend angeordnet und stirnseitig miteinander verbunden, so dass das Kapselungsgehäuse 1 eine Achse 10 aufweist, welche den Rotationsachsen der Gehäuseabschnitte 5, 6, 7 entspricht. Die Gehäuseabschnitte 5, 6, 7 sind jeweils im Wesentlichen hohlzylindrisch ausgestaltet. Der zweite und der dritte Gehäuseabschnitt 6, 7 weisen jeweils an den vom ersten Gehäuseabschnitt 5 abgewandten Enden kuppelförmige Bereiche auf. An den kuppelförmigen Bereichen sind jeweils Flansche angeordnet, durch welche elektrische Zuleitungen zu den Schaltstrecken 3, 4 des elektrischen Schaltgerätes 2 hindurchleitbar sind. Dabei kann vorgesehen sein, dass die Hindurchführung der elektrischen Leitungen durch druckfest ausgestaltete, gasdichte Scheibenisolatoren 11 erfolgt. Alternativ können jedoch auch mantelseitig an dem zweiten bzw. dritten Gehäuseabschnitten 6, 7 Flanschanschlüsse 12 vorgesehen sein, um die elektrischen Zuleitungen beispielsweise mantelseitig in das Kapselungsgehäuse 1 einzuführen.

Die Gehäuseabschnitte 5, 6, 7 umgeben den druckfesten Aufnahmeraum für die Unterbrechereinheit. Aufgrund ihrer rotationssymmetrischen Ausgestaltung sind die durch die Gehäuseabschnitte 5, 6, 7 begrenzten Abschnitte des Aufnahmeraums jeweils zylinderförmig ausgestaltet. An Endbereichen bezüglich der Achse 10 ist von einer zylindrischen Gestaltung der jeweiligen Abschnitte des Aufnahmeraumes abgewichen und es sind entsprechende Einschnürungen vorgenommen, um einen Übergang an folgende Gehäuseabschnitte vorzusehen. Die zylindrischen Abschnitte des zweiten Gehäuseabschnittes 6 und des dritten Gehäuseabschnitts 7 weisen einen größeren Durchmesser d6, d7 auf als der zylindrische Abschnitt des Aufnahmeraumes, der von dem ersten Gehäuseabschnitt 5 umgeben ist. Der Aufnahmeraum weist eine Taillierung auf. Die rotationssymmetrischen äußeren Mantelflächen der Gehäuseabschnitte 5, 6, 7 sind derart gestaltet, dass die Außendurchmesser des zweiten und dritten Gehäuseabschnittes 6, 7 größer sind als der Außendurchmesser des ersten Gehäuseabschnittes 5. An dem ersten Gehäuseabschnitt 5 ist mantelseitig ein weiterer Flansch 13 angeordnet, durch welchen eine Antriebsstange 14 gasdicht in das Kapselungsgehäuse 1 eingeführt ist. Die Antriebsstange 14 ist beispielsweise an einen Motor gekoppelt und überträgt eine Antriebsbewegung. Zur Verteilung der durch die Antriebsstange 14 übertragenen Antriebsbewegung ist im Bereich des ersten Gehäuseabschnittes 5 ein Umlenkgetriebe 15 angeordnet. Das Umlenkgetriebe 15 lenkt eine im Wesentlichen quer zur Achse 10 in das Kapselungsgehäuse 1 eingeleitete lineare Bewegung in eine lineare Bewegung um, die im Wesentlichen parallel zur Achse 10 gerichtet ist. Die Bewegung wird dabei sowohl auf die im zweiten Gehäuseabschnitt 6 als auch auf die im dritten Gehäuseabschnitt 7 befindlichen bewegbaren Kontaktstücke der Schaltstrecken 3, 4 übertragen, so dass eine Schalthandlung mit dem elektrischen Schaltgerät 2 durchgeführt werden kann.

Der erste Gehäuseabschnitt 5 weist endseitig jeweils einen Blattflansch 16 auf. Die Blattflansche 16 sind radial nach außen gekröpft, laufen um die Achse 10 um und sind mit einer Wandung des ersten Gehäuseabschnittes 5 verbunden. Die Durchmesser der Blattflansche 16 sind dabei derart bemessen, das sie den Außendurchmessern des zweiten Gehäuseabschnittes 6 und des dritten Gehäuseabschnittes 7 im Bereich der Flanschverbindungen entsprechen. Sowohl der zweite Gehäuseabschnitt 6 als auch der dritte Gehäuseabschnitt 7 weisen an ihren dem ersten Gehäuseabschnitt 5 zugewandten Enden eine Verdickung ihrer Wandungen auf. Die Verdickung ist dabei derart gestaltet, dass die Wandung sich in den Aufnahmeraum hinein derstreckt und auf den Innendurchmesser d5 des zylinderförmigen Abschnittes des Aufnahmeraumes, der von dem ersten Gehäuseabschnitt 5 begrenzt ist, überleitet. Zur Vermeidung von Kanten ist die Verdickung derart ausgebildet, dass ein stetiger Übergang zwischen den Bereichen mit unterschiedlichen Durchmessern erfolgt. Durch dieses Einziehen und gleichzeitige Verstärken der Wandung an dem zweiten und dritten Gehäuseabschnitt 6, 7 erfolgt eine Taillierung des Aufnahmeraumes im zentralen Bereich des Kapselungsgehäuses 1. Im zentralen Bereich, in welchem das Umlenkgetriebe 15 angeordnet ist, ist mittig im Aufnahmeraum ein Abschnitt mit kleinerem Durchmesser gebildet, welcher sich den von dem ersten Gehäuseabschnitt 5 zu dem zweiten und dem dritten Gehäuseabschnitt 6, 7 erweitert. Dadurch ist zum einen eine berstsichere Konstruktion eines Kapselungsgehäuses 1 gegeben, welches im Inneren ein ausreichendes Volumen zum Abströmen von in den Schaltstrecken 3, 4 bei einem Schaltvorgang entstehenden heißen Schaltgasen innerhalb des zweiten und dritten Gehäusseabschnittes 6, 7 zur Verfügung stellt. Zum anderen ist ein Kapselungsgehäuse 1 gebildet, welches trotz einer Verflanschung einzelner Gehäuseabschnitte 5, 6, 7 keine erhebliche Umfangsvergrößerung durch einen umlaufenden Flansch aufweist. Dadurch ist es möglich, mehrere Kapselungsgehäuse 1 mantelseitig eng aneinander liegend zu positionieren.

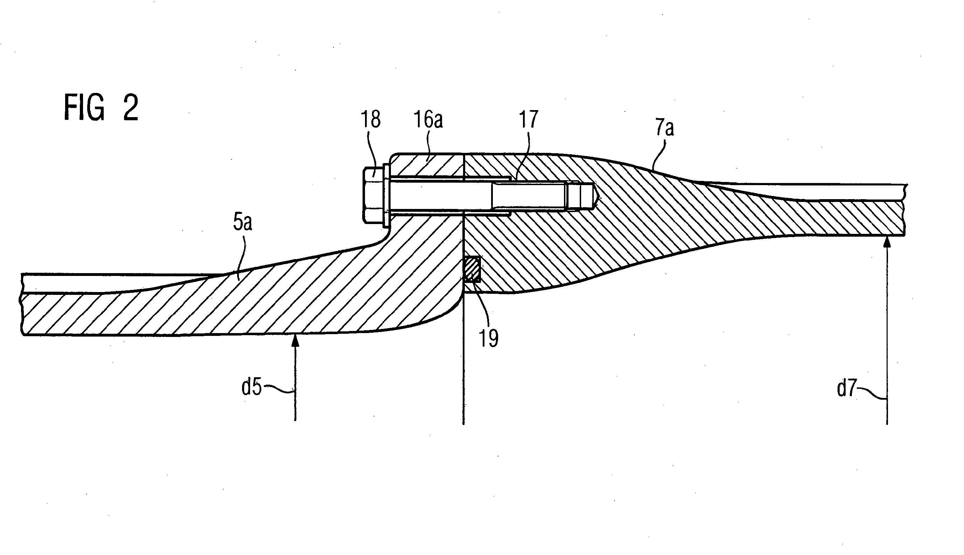

In der Figur 2 ist ein Ausschnitt einer Flanschverbindung eines ersten Gehäuseabschnitts 5a sowie eines dritten Gehäuseabschnitts 7a dargestellt. Die Wandung des dritten Gehäuseabschnitts 7a ist in Richtung des Blattflansches 16a des ersten Gehäuseabschnittes 5a verdickt ausgestaltet. Dabei ist die Verdickung zum einen nach innen in den begrenzten Aufnahmeraum hineingezogen zum anderen ist die Verdickung auch nach außen ausgeformt. Durch die Verdickung der Stirnseite des dritten Gehäuseabschnittes 7a ist ausreichend Volumen geschaffen um eine Bohrung 17 einzubringen. Die Bohrung 17 ist mit einem Innengewinde versehen, in welches eine Schraube 18 einschraubbar ist. Die Schraube 18 durchsetzt dabei eine Ausnehmung des Blattflansches 16a und presst diesen gegen die Stirnseite des dritten Gehäuseabschnittes 7a. Zur Abdichtung des Flansches ist ein Dichtring 19 in eine Nut der Fügestelle eingelegt. Zur Erzeugung einer gleichmäßigen Anpresskraft sind am Umfang des Blattflansches 16a eine Vielzahl von Ausnehmungen angeordnet, die von einer Vielzahl von Schrauben 18 durchsetzt sind. Statt der Verwendung einer Schraube 18 können auch weitere Verbindungselemente zum Einsatz gelangen. Beispielsweise können an der Wandung des dritten Gehäuseabschnittes 7 stirnseitig eingebrachte Bolzen vorgesehen sein, welche nach dem Hindurchführen durch die Ausnehmungen des Blattflansches 16a vernietet werden. Um die Umbruchkräfte an dem Blattflansch 16a zu beherrschen, ist zusätzlich im Bereich des Blattflansches 16a die Wandung des ersten Gehäuseabschnittes 5a verdickt. Die Verdickung am Fußpunkt des Blattflansches 16a erfolgt dabei im Wesentlichen stetig in radialer Richtung nach außen.

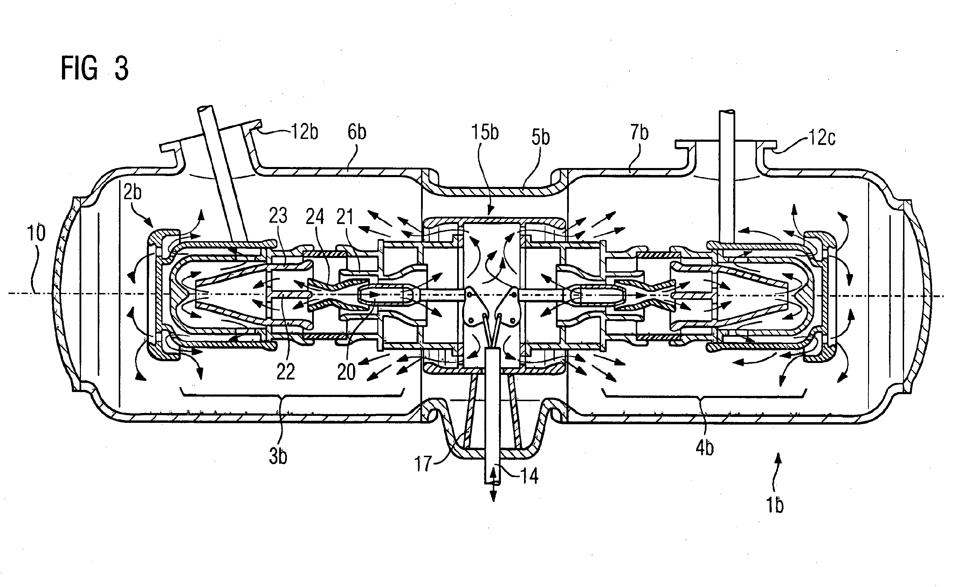

In der Figur 3 ist eine Variante eines Kapselungsgehäuses 1b dargestellt, welches aus einem ersten, einem zweiten und einem dritten Gehäuseabschnitt 5b, 6b, 7b gebildet ist. Das Kapselungsgehäuse 1b weist grundsätzlich denselben Aufbau wie das in der Figur 1 gezeigte Kapselungsgehäuse 1 auf. So ist auch hier der erste Gehäuseabschnitt 5b derart in seinem Innendurchmesser verringert, dass der Aufnahmeraum des Kapselungsgehäuses 1b im zentralen Abschnitt eine Taillierung aufweist. Wie auch bei dem in der Figur 1 gezeigten Ausführungsbeispiel sind die Gehäuseabschnitte 5b, 6b, 7b aus einem elektrisch leitenden Material beispielsweise Aluminiumguss gebildet. Der erste Gehäuseabschnitt 5b ist zur Überleitung auf den zweiten und dritten Gehäuseabschnitt 6b, 7b an seinen Endseiten konisch erweitert. Bezüglich der Achse 10 endseitig weist das Kapselungsgehäuse 1b Öffnungen auf, die mittels Blinddeckeln verschlossen sind. Eine Zuführung von elektrischen Leitungen zu der im Innern befindlichen Unterbrechereinheit eines Hochspannungs-Leistungsschalters erfolgt im in der Figur 3 dargestellten Ausführungsbeispiel durch mantelseitig angeformte Flansche 12b, 12c.

Die Unterbrechereinheit weist eine im Wesentlichen rotationssymmetrische Gestalt auf, wobei die Rotationsachse im Wesentlichen parallel zu der Achse 10 angeordnet ist. Die Unterbrechereinheit weist eine erste Schaltstelle 3b sowie eine zweite Schaltstelle 4b auf. Die Schaltstellen 3b, 4b sind an ihren dem ersten Gehäuseabschnitt 5b zugewandten Enden von einem Gehäuse eines Umlenkgetriebes 15b getragen. Das elektrisch leitende Gehäuse ist über einen Isolierstützer 17 an dem ersten Gehäuseabschnitt 5b abgestützt. Das elektrisch leitende Gehäuse des Umlenkgetriebes 15b dient der elektrischen Kontaktierung der beiden Schaltstellen 3b, 4b untereinander. Mittels einer Antriebsstange 14 ist eine Antriebsbewegung im zentralen Bereich des Kapselungsgehäuses 1b in dieses einführbar. Durch das Umlenkgetriebe 15b wird eine im Wesentlichen quer zur Achse 10 verlaufende lineare Bewegung in eine lineare Bewegung umgelenkt, die längs der Achse 10 verläuft.

Die Arbeitsweise der Schaltstrecken wird beispielhaft anhand der ersten Schaltstrecke 3b im Folgenden erläutert. Die erste Schaltstrecke 3b weist ein bewegbares Lichtbogenkontaktstück 20 auf. Das bewegbare Lichtbogenkontaktstück 20 ist von einem bewegbaren Nennstromkontaktstück 21 koaxial umgeben. Koaxial gegenüberliegend sind ein ortsfestes Lichtbogenkontaktstück 22 sowie ein ortsfestes Nennstromkontaktstück 23 angeordnet. Das bewegbare Lichtbogenkontaktstück 20 ist von einer Isolierstoffdüse 24 umgeben. Die Isolierstoffdüse 24 dient der Lenkung und Leitung von Schaltgasen. Vor einer Ausschaltung befinden sich die Nennstromkontaktstücke 21, 23 sowie die Lichtbogenkontaktstücke 20, 22 in elektrisch leitender Verbindung. Im Zuge einer Ausschaltbewegung werden das bewegbare Lichtbogenkontaktstück 20 sowie das bewegbare Nennstromkontaktstück 21 in Richtung des ersten Gehäuseabschnittes 5b bewegt. Zunächst erfolgt eine Kontakttrennung an den Nennstromkontaktstücken 21, 23 anschließend erfolgt eine Trennung der Lichtbogenkontaktstücke 20, 22, wobei im Regelfall ein Schaltlichtbogen entsteht. Der Schaltlichtbogen erhitzt das im Innern des Kapselungsgehäuses 1b befindliche Isoliergas und expandiert dieses. Aufgrund des erhöhten Gasdruckes im Bereich der Schaltstelle strömt das Schaltgas durch entsprechende Abströmkanäle aus der Schaltstelle heraus. Zum einen erfolgt eine Lenkung des Schaltgases durch das hohl ausgebildete bewegbare Lichtbogenkontaktstück zu in Richtung des Umlenkgetriebes 15b. Im Gehäuse des Umlenkgetriebes 15b sind Ausströmöffnungen angeordnet, welche das Schaltgas in axialer Richtung aus dem Bereich des ersten Gehäuseabschnittes 5b jeweils in Richtung des zweiten und dritten Gehäuseabschnittes 6b, 7b austreten lassen. Um die Lenkung des Gasstromes zu unterstützen, sind an dem Gehäuse des Umlenkgetriebes 15b Deflektoren angeordnet.

Weiterhin wird das Schaltgas mittels der Isolierstoffdüse 24 in Richtung der feststehenden Nennstrom- sowie Lichtbogenkontaktstücke 22, 23 abgeleitet. An dem von dem Umlenkgetriebe 15b abgewandten Ende der ersten Schaltstelle 3b ist zur Lenkung und Abkühlung der heißen Schaltgase ein Abströmlabyrinth angeordnet. Dieses ist im Wesentlichen aus ineinander gesteckten zylindrischen Abschnitten gebildet, welche Öffnungen aufweisen, so dass das Schaltgas mäandrierend abströmt. Nach dem Austreten aus dem Abströmlabyrinth wird das Schaltgas gegen Deflektoren gelenkt, wodurch sich das Schaltgas innerhalb des von dem zweiten Gehäuseabschnitt 6b umgebenen Teil des Aufnahmeraumes entspannt.

Die zweite Schaltstelle 4b weist einen gleichartigen Aufbau auf und arbeitet nach denselben Prinzipien wie die vorstehend beschriebene erste Schaltstelle 3b.

Die in die Figur 3 eingetragenen Pfeile geben beispielhaft die Abströmwege der heißen Schaltgase an. Wie zu erkennen ist, strömen die Schaltgase im Wesentlichen jeweils in die durch den zweiten bzw. den dritten Gehäuseabschnitt 6b, 7b gebildeten Bereiche des Aufnahmeraumes des Kapselungsgehäuses 1b aus.

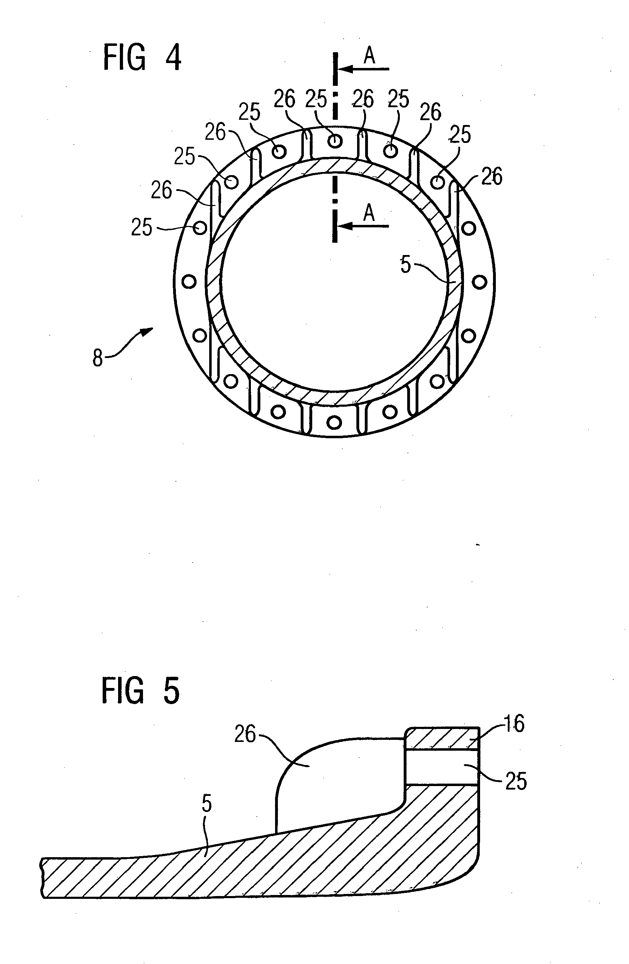

In der Figur 4 ist eine Detailansicht der in der Figur 1 gezeigten ersten Flanschverbindung 8 dargestellt. In einer Draufsicht ist die von der Flanschfläche des Blattflansches 16 abgewandte Seite des Blattflansches 16 dargestellt. Am Umfang sind eine Vielzahl von Ausnehmungen 25 eingebracht. Zur Stabilisierung des nach außen gekröpften Blattflansches 16 sind zwischen einer äußeren Mantelfläche des ersten Gehäuseabschnittes 5 und dem Blattflansch 16 Rippen 26 angeordnet. Die Rippen 26 sind plattenförmig ausgestaltet, wobei die Platten annähernd parallel zueinander ausgerichtet sind. Dadurch ergeben sich Vorteile hinsichtlich der Fertigung der Gehäuseteile durch Gussverfahren, da aufgrund der achsgleichen Ausrichtung der Rippen 26 eine leichte Lösung der Gusskörper aus einer Gussform ermöglicht ist.

Die Figur 4 zeigt einen Schnitt entlang der in der Figur 4 dargestellten Schnittachse A-A. Im Schnitt ist eine Ausnehmung 25 erkennbar, welche in den Blattflansch 16 eingebracht ist. Zur Stabilisierung ist eine plattenartige Rippe 26 zwischen dem Blattflansch 16 und der Wandung des ersten Gehäuseabschnittes 5 angegossen.

## Patentansprüche

1. Zumindest drei Gehäuseabschnitte (5,5a,5b,6,6b,7,7a,7b) aufweisendes, sich längs einer Achse (10) im Wesentlichen rohrförmig erstreckendes gasdichtes Kapselungsgehäuse (1,1b), dessen erster Gehäuseabschnitt (5,5a,5b) zwischen einen zweiten und einen dritten Gehäuseabschnitt (6,6b,7,7a,7b) geflanscht ist, wobei die Gehäuseabschnitte (5,5a,5b,6,6b,7a,7b) einen druckfesten Aufnahmeraum für ein elektrisches Schaltgerät (2) begrenzen, wobei der Aufnahmeraum im Bereich des den zweiten und den dritten Gehäuseabschnitt (6,6b,7,7a,7b) verbindenden ersten Gehäuseabschnittes (5,5a,5b) einen geringeren Querschnitt aufweist, als die jeweiligen Querschnitte des Aufnahmeraumes im Bereich des zweiten und des dritten Gehäuseabschnittes (6,6b,7,7a,7b),
**dadurch gekennzeichnet, dass**
zum Anflanschen des zweiten Gehäuseabschnittes (6,6b) an den ersten Gehäuseabschnitt (5;5a,5b) oder des dritten Gehäuseabschnittes (7,7a,7b) an den ersten Gehäuseabschnitt (5,5a,5b) eine Flanschverbindung (8,9) gebildet ist, welche an dem ersten Gehäuseabschnitt (5,5a,5b) einen Blattflansch (16) aufweist, welcher mittels eines lösbaren Verbindungselementes (18) an eine Stirnseite des zweiten oder des dritten Gehäuseabschnittes (6,6b,7,7a,7b) gepresst ist, wobei eine Wandung des zweiten oder dritten Gehäuseabschnittes (6,6b,7,7a,7b) im Bereich der Stirnseite verdickt ist und die Verdickung zumindest teilweise radial nach Innen unter Verringerung des Querschnitts des Aufnahmeraumes ausgeformt ist, wobei längs der Achse (10) eine Unterbrechereinheit eines druckgasisolierten Leistungsschalters (2,2b) angeordnet ist, wobei während eines Schaltvorganges entstehende Gase jeweils in den zweiten oder den dritten Gehäuseabschnitt (6,6b,7,7a,7b) ausströmen und dort verwirbeln.

2. Zumindest drei Gehäuseabschnitte (5,5a,5b,6,6b,7,7a,7b) aufweisendes Kapselungsgehäuse (1a,1b) nach Anspruch 1,
**dadurch gekennzeichnet, dass**
der Blattflansch (16) bezüglich der Achse (10) radial nach Außen gekröpft ist.

3. Zumindest drei Gehäuseabschnitte (5,5a,5b,6,6b,7,7a,7b) aufweisendes Kapselungsgehäuse (1a,1b) nach Anspruch 1 oder 2,
**dadurch gekennzeichnet, dass**
die Verdickung radial nach außen, die äußere Kontur des zweiten oder dritten Gehäuseabschnittes (7a) überragend ausgeformt ist.

4. Zumindest drei Gehäuseabschnitte (5,5a,5b,6,6b,7,7a,7b) aufweisendes Kapselungsgehäuse (1a,1b) nach einem der Ansprüche 1 bis 3,
**dadurch gekennzeichnet, dass**
der Blattflansch (16) Ausnehmungen (25) aufweist, durch welche in der Stirnseite der Wandung des zweiten oder dritten Gehäuseabschnittes (6,6b,7,7a,7b) des Kapselungsgehäuses (1a,1b) verankerte Verbindungselemente (18) hindurchragen.

5. Zumindest drei Gehäuseabschnitte (5,5a,5b,6,6b,7,7a,7b) aufweisendes Kapselungsgehäuse (1a,1b) nach Anspruch 4,
**dadurch gekennzeichnet, dass**
zwischen Ausnehmungen den Blattflansch (16) stabilisierende Rippen (26) angeordnet sind, wobei die Rippen (26) parallel zueinander ausgerichtet sind.

6. Zumindest drei Gehäuseabschnitte (5,5a,5b,6,6b,7,7a,7b) aufweisendes Kapselungsgehäuse (1a,1b) nach einem der Ansprüche 1 bis 5,
**dadurch gekennzeichnet, dass**
zwischen dem ersten und dem zweiten Gehäuseabschnitt (5,5a,5b,6,6b) sowie dem ersten und dem dritten Gehäuseabschnitt (5,5a,5b,7,7a,7b) jeweils gleichartige Flanschverbindungen (8,9) angeordnet sind.

7. Zumindest drei Gehäuseabschnitte (5,5a,5b,6,6b,7,7a,7b) aufweisendes Kapselungsgehäuse (la,1b) nach einem der Ansprüche 1 bis 6,
**dadurch gekennzeichnet, dass**
mantelseitig an dem ersten Gehäuseabschnitt (5,5a,5b) eine Antriebseinrichtung (14) in das Innere des Kapselungsgehäuses (1) eingeführt ist.

8. Zumindest drei Gehäuseabschnitte (5,5a,5b,6,6b,7,7a,7b) aufweisendes Kapselungsgehäuse (1a,1b) nach einem der Ansprüche 1 bis 7,
**dadurch gekennzeichnet, dass**
die Gehäuseabschnitte (5,5a,5b,6.6b,7,7a,7b) aus elektrisch leitendem Material geformte Gusskörper sind.

## Claims

1. Gas-tight capsule housing (1, 1b), which comprises at least three housing sections (5, 5a, 5b, 6, 6b, 7, 7a, 7b) and which extends along an axis (10) in an essentially tubular manner, the first housing section (5, 5a, 5b) of which is flanged between a second and a third housing section (6, 6b, 7, 7a, 7b), the housing sections (5, 5a, 5b, 6, 6b, 7a, 7b) forming the boundary of a pressure-tight receiving chamber for an electrical switching device (2), the receiving chamber having a smaller cross section in the region of the first housing section (5, 5a, 5b), which connects the second and the third housing sections (6, 6b, 7, 7a, 7b), than the respective cross-sections of the receiving chamber in the region of the second and the third housing sections (6, 6b, 7, 7a, 7b), **characterized in that** for flanging the second housing section (6, 6b) onto the first housing section (5, 5a, 5b) or the third housing section (7, 7a, 7b) onto the first housing section (5, 5a, 5b), a flange joint (8, 9) is formed, which has a flat face flange (16) on the first housing section (5, 5a, 5b), which is pressed onto a face of the second or the third housing section (6, 6b, 7, 7a, 7b) by means of a releasable joining element (18), a wall of the second or third housing section (6, 6b, 7, 7a, 7b) being made thicker in the region of the face and the thickened area being formed at least partially radially inward thus reducing the cross section of the receiving chamber, an interrupter unit of a compressed gas insulated circuit breaker (2, 2b) being arranged along the axis (10), wherein gases, which are produced during a switching operation, flow out into the second or third housing section (6, 6b, 7, 7a, 7b) respectively where they swirl around.

2. Capsule housing (1a, 1b), which comprises at least three housing sections (5, 5a, 5b, 6, 6b, 7, 7a, 7b), according to Claim 1, **characterized in that** the flat face flange (16) is offset radially outward with respect to the axis (10).

3. Capsule housing (1a, 1b), which comprises at least three housing sections (5, 5a, 5b, 6, 6b, 7, 7a, 7b), according to Claim 1 or 2, **characterized in that** the thickened area is formed radially outward to overhang the outer contour of the second or third housing section (7a).

4. Capsule housing (1a, 1b), which comprises at least three housing sections (5, 5a, 5b, 6, 6b, 7, 7a, 7b), according to one of Claims 1 to 3, **characterized in that** the flat face flange (16) has openings (25) through which joining elements (18), which are anchored in the face of the wall of the second or third housing section (6, 6b, 7, 7a, 7b) of the capsule housing (1a, 1b), protrude.

5. Capsule housing (1a, 1b), which comprises at least three housing sections (5, 5a, 5b, 6, 6b, 7, 7a, 7b), according to Claim 4, **characterized in that** ribs (26), which stabilize the flat face flange (16), are arranged between openings, the ribs (26) being aligned parallel with one another.

6. Capsule housing (1a, 1b), which comprises at least three housing sections (5, 5a, 5b, 6, 6b, 7, 7a, 7b), according to one of Claims 1 to 5, **characterized in that** identical flange joints (8, 9) in each case are arranged between the first and second housing sections (5, 5a, 5b, 6, 6b) as well as the first and third housing sections (5, 5a, 5b, 7, 7a, 7b).

7. Capsule housing (1a, 1b), which comprises at least three housing sections (5, 5a, 5b, 6, 6b, 7, 7a, 7b), according to one of Claims 1 to 6, **characterized in that** a drive device (14) is introduced into the interior of the capsule housing (1) on the sleeve side of the first housing section (5, 5a, 5b).

8. Capsule housing (1a, 1b), which comprises at least three housing sections (5, 5a, 5b, 6, 6b, 7, 7a, 7b), according to one of Claims 1 to 7, **characterized in that** the housing sections (5, 5a, 5b, 6, 6b, 7, 7a, 7b) are cast bodies formed from electrically conducting material.

## Revendications

1. Boîtier ( 1, 1b ) d'encapsulation étanche au gaz, qui a trois parties ( 5, 5a, 5b, 6, 6b, 7, 7a, 7b ), qui s'étendent sensiblement tubulairement le long d'un axe ( 10 ), dont la première partie ( 5, 5a, 5b ) est bridée entre une deuxième et une troisième parties ( 6, 6b, 7, 7a, 7b ), les parties ( 5, 5a, 5b, 6, 6b, 7a, 7b ) du boîtier délimitant un espace de réception résistant à la pression pour un appareil ( 2 ) de commutation électrique, l'espace de réception ayant, dans la région de la première partie ( 5, 5a, 5b ) du boîtier reliant la deuxième et la troisième parties ( 6, 6b, 7, 7a, 7b ) du boîtier, une section transversale plus petite que les sections transversales respectives de la chambre de réception dans la région de la deuxième et de la troisième parties ( 6, 6b, 7, 7a, 7b ) du boîtier,
**caractérisé en ce que**
pour brider la deuxième partie ( 6, 6b ) du boîtier à la première partie ( 5, 5a, 5b ) du boîtier ou à la troisième partie ( 7, 7a, 7b ) du boîtier, il est formé, sur la première partie ( 5, 5a, 5b ) du boîtier, un assemblage ( 8, 9 ) à bride, qui a, sur la première partie ( 5, 5a, 5b ) du boîtier, une bride ( 16 ) à lame, qui est, au moyen d'un élément ( 18 ) d'assemblage amovible, pressée sur un côté frontal de la deuxième ou de la troisième partie ( 6, 6b, 7, 7a, 7b ) du boîtier, une paroi de la deuxième ou de la troisième partie ( 6, 6b, 7, 7a, 7b ) du boîtier étant épaissie dans la région du côté frontal et l'épaississement dépassant, au moins en partie, radialement vers l'intérieur, avec diminution de la section transversale de l'espace de réception, dans lequel il est monté, le long de l'axe ( 10 ), une unité d'interrupteur d'un disjoncteur ( 2, 2b ) à isolation par du gaz sous pression, dans lequel des gaz se créant pendant une opération de commutation sortent respectivement dans la deuxième ou la troisième partie ( 6, 6b, 7, 7a, 7b ) du boîtier et y sont mis en tourbillonnement.

2. Boîtier ( 1a, 1b ) d'encapsulation, qui a au moins trois parties ( 5, 5a, 5b, 6, 6b, 7, 7a, 7b ) de boîtier suivant la revendication 1,
**caractérisé en ce que**
la bride ( 16 ) à lame est coudée radialement vers l'extérieur par rapport à l'axe ( 10 ).

3. Boîtier ( 1a, 1b ) d'encapsulation, qui a au moins trois parties ( 5, 5a, 5b, 6, 6b, 7, 7a, 7b ) de boîtier suivant la revendication 1 ou 2,
**caractérisé en ce que**
l'épaississement dépasse radialement vers l'extérieur le contour extérieur de la deuxième ou de la troisième partie ( 7a ) du boîtier.

4. Boîtier ( 1a, 1b ) d'encapsulation, qui a au moins trois parties ( 5, 5a, 5b, 6, 6b, 7, 7a, 7b ) de boîtier suivant l'une des revendications 1 à 3,
**caractérisé en ce que**
la bride ( 16 ) à lame a des évidements ( 25 ), dans lesquels pénètrent des éléments ( 18 ) de liaison ancrés dans le côté frontal de la paroi de la deuxième ou de la troisième partie ( 6, 6b, 7, 7a, 7b ) du boîtier ( 1a, 1b ) d'encapsulation.

5. Boîtier ( 1a, 1b ) d'encapsulation, qui a au moins trois parties ( 5, 5a, 5b, 6, 6b, 7, 7a, 7b ) de boîtier suivant la revendication 4,
**caractérisé en ce que**
des nervures ( 26 ) stabilisant la bride ( 16 ) à lame sont disposées entre des évidements, les nervures ( 26 ) étant dirigées parallèlement entre elles.

6. Boîtier ( 1a, 1b ) d'encapsulation, qui a au moins trois parties ( 5, 5a, 5b, 6, 6b, 7, 7a, 7b ) de boîtier suivant l'une des revendications 1 à 5,
**caractérisé en ce que**
respectivement des assemblages ( 8, 9 ) à bride de même type sont disposés entre la première et la deuxième parties ( 5, 5a, 5b, 6, 6b ) du boîtier, ainsi qu'entre la première et la troisième parties ( 5, 5a, 5b, 7, 7a, 7b ) du boîtier.

7. Boîtier ( 1a, 1b ) d'encapsulation, qui a au moins trois parties ( 5, 5a, 5b, 6, 6b, 7, 7a, 7b ) de boîtier suivant l'une des revendications 1 à 6,
**caractérisé en ce que**
du côté de la surface latérale de la première partie ( 5, 5a, 5b ) du boîtier, un dispositif ( 14 ) d'entraînement est inséré à l'intérieur du boîtier ( 1 ) d'encapsulation.

8. Boîtier ( 1a, 1b ) d'encapsulation, qui a au moins trois parties ( 5, 5a, 5b, 6, 6b, 7, 7a, 7b ) de boîtier suivant l'une des revendications 1 à 7,
**caractérisé en ce que**
les parties ( 5, 5a, 5b, 6, 6b, 7, 7a, 7b ) du boîtier sont des pièces coulées en un matériau conducteur de l'électricité.
